# EUROPEAN PATENT SPECIFICATION

(11) **EP 2 028 958 B1**
(45) Date of publication and mention of the grant of the patent: **13.08.2014**
(21) Application number: 07809441.4
(22) Date of filing: 07.06.2007
(51) Int. Cl.: A23N 17/00

(54) **MASH CONDITIONING APPARATUS AND METHOD**
BREIKONDITIONIERER UND VERFAHREN
APPAREIL ET PROCÉDÉ DE CONDITIONNEMENT DE BOUILLIE

(30) Priority: 08.06.2006 US 811887 P
(43) Date of publication of application: 04.03.2009
(73) Proprietor: CPM Acquisition Corp., Waterloo IA 50703 (US)
(72) Inventor: THOM, Kelsey, Cedar Falls IA 50613 (US)
(74) Representative: Lewis, Darren John
(86) International application number: PCT/US2007/013627
(87) International publication number: WO 2007/146191

(56) References cited:
- WO-A-98/43682
- GB-A- 474 320
- GB-A- 1 548 703
- GB-A- 2 249 706
- US-A- 3 268 336

## Description

### Field of the Invention

This invention relates generally to a mash conditioning apparatus and method and, more particularly, to an apparatus and method for conditioning of mash with a steam and water mixture before being placed into a pellet mill.

### Description of the State of the Art

Pelletized animal feed is produced from a mash product that is hydrothermally conditioned prior to being formed into pellets by a pellet mill. The mash is composed of various grains, such as but not limited to corn and soybeans, ground to a small particle size which is then mixed together in a batch mixer and later stored prior to being conditioned Mash conditioning has several advantages, including but not limited to causing a desired degree of starch conversion, destruction of harmful organisms in the mash, improvement of pellet durability and other characteristics, and improvement in pellet mill operations. For these and other advantages to be realized, the mash must be conditioned at an optimal temperature and an optimal moisture content. If temperature and moisture content are too low, pellet characteristics such as durability may be less than desired. If the temperature and moisture content of the mash product placed into a pellet mill are too high, the shear strength of the mash feed decreases to a point where the mash product becomes "mushy" and too wet to push through a pelleting die or other machinery, causing the machinery to skid, become choked or plugged, or otherwise become inoperative.

Mash conditioning can be performed in a mixing or conditioning vessel having an inlet end where unconditioned mash product is introduced and an outlet end where conditioned mash product is removed for further processing in a pellet mill. Typically, unconditioned mash is stored in a holding bin above the conditioning vessel. Prior to entering the conditioning vessel, the unconditioned mash product has a starting temperature and moisture content, which can be a function of the natural moisture trapped in the whole grains, frictional heat produced from the grinding process, and weather conditions. When inside the conditioning vessel, steam is used to bring the mash product to the optimal temperature and moisture content. The steam is introduced into the conditioning vessel through a steam manifold at the inlet end of the vessel.

In prior mash condition systems, moisture content in the conditioned mash has been difficult to control because of the poor steam quality, usually 80% or below, produced by steam separators. Steam quality is a measure of the amount of saturated steam that coexists with condensate and is determined by dividing the mass of steam by the total mass of steam and condensate. Excessive moisture in the form of free droplets carried along with the main steam flow might impinge on mechanical components and cause mechanical damage. Also, high-velocity condensate can score valve seats and cause other erosion and corrosion related problems. In recent years, improvements have been made to steam separators which allow them to be highly efficient and produce steam quality near 100%. High quality steam produces relatively dry heat with low moisture content and, therefore, is less likely to cause mechanical damage, erosion, and corrosion related problems.

A drawback with using high quality steam in mash conditioning is that, depending on weather conditions or the starting moisture content of the mash product, the mash reaches its optimal temperature without reaching its optimal moisture content. This occurs because high quality steam only provides a 1% moisture increase per a temperature rise of about 16.7 degrees C (30 degrees F), as compared low quality steam which provides about a 1% moisture per a temperature rise of about 11.1 degrees C (20 degrees F). For example, after grinding, mash can have a starting condition of about 32.2 degrees C (90 degrees F) with 13% moisture content by weight. It may be desired to bring the mash to an optimal condition of 90.6 degrees C (195 degrees F) with 17% moisture content by weight. However, use of high quality steam to raise the temperature from 32.2 degrees C (90 degrees F) to 90.6 degrees C (195 degrees F) would only result in a change in moisture content from 13% to 16.5%. Pellet durability would be diminished because the moisture content is 0.5% short of optimal.

The problem of suboptimal moisture content can be aggravated by weather and atmospheric conditions, which may increase or lower the starting temperature and moisture content of the unconditioned mash product stored in a holding bin above the conditioning vessel. During warm summer months, for instance, the starting temperature of the unconditioned mash product may be greater than 32.2 degrees C (90 degrees F). Elevated starting temperatures can lower the starting moisture content of the unconditioned mash. As a result, when the mash product reaches the optimal temperature of 90.6 degrees C (195 degrees F), the mash product would have a moisture content that is 1% to 1-1/2% below the optimal level of 17%.

Accordingly, there is a need for a mash conditioning apparatus and method that uses high quality steam to minimize erosion of components. There is also a need for a mash conditioning apparatus and method that allows an optimal temperature and moisture content to be achieved in mash product prior being placed in a pellet mill. Further, there is a need for a mash conditioning apparatus and method that allows for additional moisture to be added to the mash product in a controlled manner in order to achieve the optimal moisture content. The present invention satisfied these and other needs.

### SUMMARY OF THE INVENTION

Briefly and in general terms, the present invention is directed to an apparatus and method for conditioning mash to an optimal temperature and an optimal moisture content. An apparatus in accordance with aspects of the invention comprises an injector housing comprising a steam inlet port and steam outlet port, the injector housing defining a steam flow path between the steam inlet port and the steam outlet port, and a water delivery conduit terminating in a water delivery nozzle oriented to introduce water into the steam flow path.

In further aspects of the invention, a steam delivery conduit in fluid communication with the steam inlet port of the injector housing. In other further aspects, a segment of the water delivery conduit is in thermal communication with a segment of the steam delivery conduit such that water within the water delivery conduit can be heated by steam within the steam delivery conduit. In yet other further aspects, the nozzle is disposed within the steam flow path and the nozzle is oriented to deliver water toward the steam outlet port.

The apparatus, in other aspects of the invention, further comprises a conditioner vessel for holding mash product, the vessel comprising a conditioner inlet port in fluid communication with the steam outlet port of the injector housing. In yet other aspects, the apparatus further comprises a rotatable shaft disposed within the conditioner vessel and a pick attached to the rotatable shaft for moving the mash product within the conditioner vessel in a selected rotational direction within the conditioner vessel.

The apparatus, in still other aspects, further comprises a steam supply system in fluid communication with the conditioner vessel, the steam supply system providing steam that produces a 1% increase in the moisture content of the mash product per a temperature rise greater than about 11.1 degrees C (20 degrees F) in the mash product. In other aspects, the apparatus comprises a steam supply system in fluid communication with the steam inlet port of the injector housing, the steam supply system providing steam to the injector housing having a steam quality greater than about 80%.

An apparatus for condition mash in accordance with aspects of the invention comprises an injector housing comprising an outlet port and a steam-water mixing chamber adjacent the outlet port, a steam supply conduit connected to the injector housing, a water supply conduit connected to the injector housing, the water supply conduit comprising a segment disposed adjacent the steam supply conduit to allow water within the water supply conduit to be heated by steam within the steam supply conduit, and a water delivery nozzle in fluid communication with the water supply conduit, the water delivery nozzle oriented to deliver the water heated by the steam into the steam-water mixing chamber.

A method for conditioning mash in accordance with aspects of the invention comprises mixing heated water and steam to produce a water-steam mixture, adding the water-steam mixture to a mash having a starting temperature and a starting moisture content, and bringing the mash to an optimal temperature and an optimal moisture content.

In detailed aspects, the starting temperature is within a range from about 32.2 degrees C (90 degrees F) to about 37.8 degrees C (100 degrees F) and the optimal temperature is within a range from about 90.6 degrees C (195 degrees F) to about 96.1 degrees C (205 degrees F). In other detailed aspects, the starting moisture content is within a range from about 12% to about 13-1/2% and the optimal moisture content is within a range from about 17% to about 17-1/2%.

The method, in other aspects of the invention, further comprises adding steam to the mash in addition to the water-steam mixture. In other aspects, the heated water is heated with the steam prior to mixing it with the steam.

The method, in further aspects of the invention, comprises regulating the amount of steam in the water-steam mixture as a function of the starting temperature or starting moisture content of the mash. In other aspects, the method comprises regulating the amount of water in the water-steam mixture as a function of the starting temperature or starting moisture content of the mash.

### BRIEF DESCRIPTION OF THE DRAWINGS

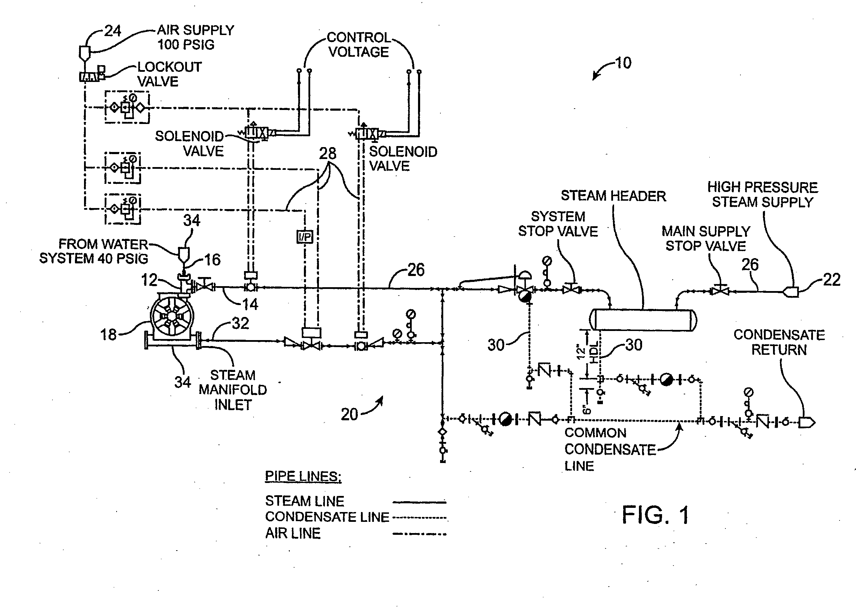

FIG. 1 is a schematic drawing of a mash conditioning system showing an injector housing connected to a conditioner vessel for holding mash, a water system for delivering water to the injector system, and a steam system for delivering steam to the injector system and to a steam manifold at an inlet end of the conditioner vessel.

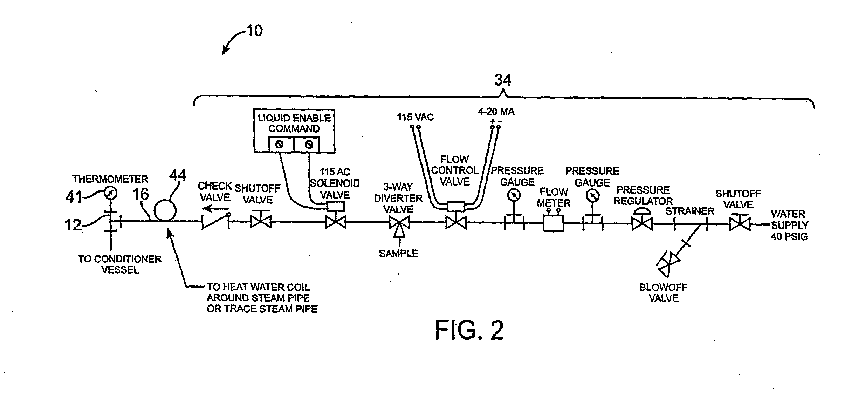

FIG. 2 is a schematic drawing of a portion of the mash conditioning system of FIG. 1 showing the injector connected to a water system comprising a water supply, various valves, and various gauges.

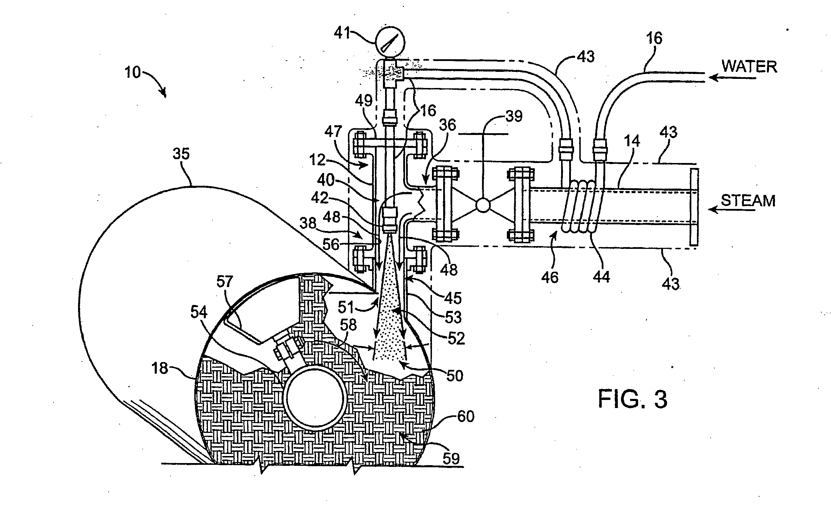

FIG. 3 is partial cross-sectional view of a portion of the mash conditioning system of FIG. 1 showing a steam supply conduit entering the injector housing from a side opening of the injector housing, a water supply conduit entering the injector housing from a top opening of the injector housing, a water nozzle within a curved steam flow path inside the injector housing, and a segment of the water supply conduit located adjacent a segment of the steam supply conduit so as to preheat the water delivered to the injector housing.

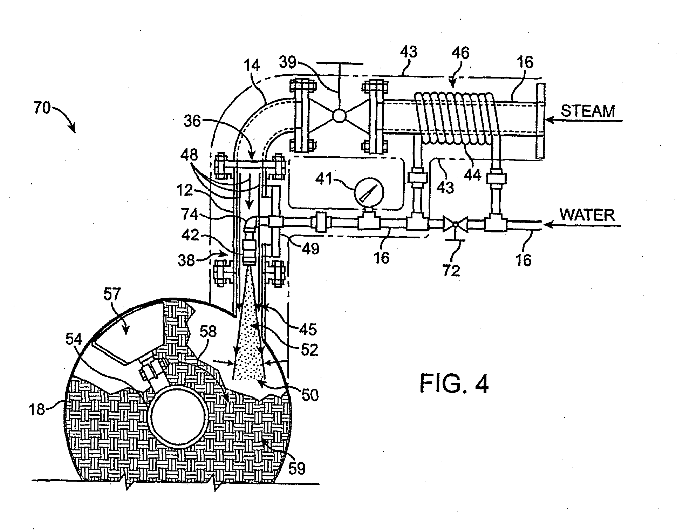

FIG. 4 is a partial cross-sectional view of a portion of a mash conditioning system showing a steam supply conduit entering an injector housing from a top opening of the injector housing, a water supply conduit entering the injector housing from a side opening of the injector housing, and a water nozzle oriented to direct water toward a bottom opening of the injector housing.

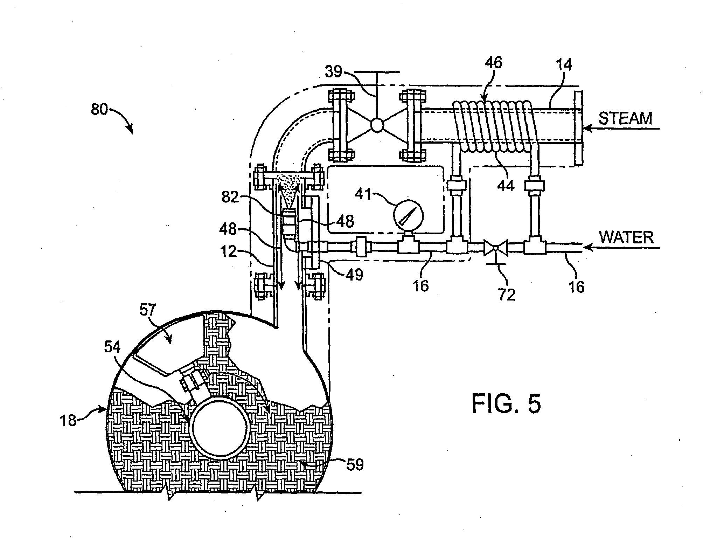

FIG. 5 is a partial cross-sectional view of a portion of a mash conditioning system showing a water nozzle oriented to direct water toward a top opening of an injector housing.

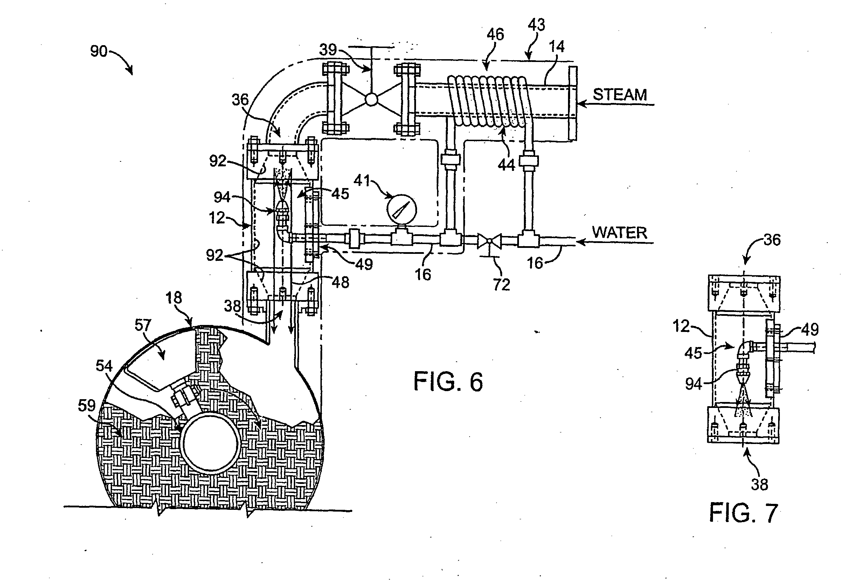

FIG. 6 is a partial cross-sectional view of a portion of a mash conditioning system showing an injector housing having an enlarged water-steam mixing delivered by chamber and interior walls that flare outward from a top opening of the injector nozzle and taper inward toward a bottom opening of the injector nozzle, and showing a nozzle pointed toward the top opening.
FIG. 7 is a view of the enlarged water-steam mixing chamber of FIG. 6 showing the nozzle alternatively mounted such that it points toward a bottom opening of the injector housing.

### DETAILED DESCRIPTION OF THE INVENTION

Referring now in more detail to the exemplary drawings for purposes of illustrating embodiments of the invention, wherein like reference numerals designate corresponding or like elements among the several views, there is shown in FIG. 1 a mash conditioning system 10. The mash conditioning system 10, illustrated schematically, includes an injector housing 12, a first steam supply conduit 14 connected to the injector housing, and a water supply conduit 16 connected to the injector housing. The injector housing 12 is mounted onto a cylindrical conditioner vessel 18 for holding and processing mash product.

The first steam supply conduit 14 extends from a steam supply system 20, which includes a high pressure steam supply 22, an air supply 24, various steam lines 26, various air lines 28, various condensate lines 30, and various valves, temperature gauges, pressure regulators, controls, and other components. A second steam supply conduit 32 extends from the steam supply system 20 and is connected to a steam manifold 34 attached to an inlet end 35 (FIG. 3) of the conditioner vessel 18. The inlet end is where the unconditioned mash is placed into the conditioner vessel 18 by a mechanical feeder, screw conveyor, or other means.

Preferably, the steam supply system 20 provides steam to the first steam supply conduit 14 and the second steam supplying conduit 32 having a steam quality greater than about 80% to reduce erosion and corrosion related problems. In some embodiments of the present invention, the steam supply system provides steam that produces a 1% increase in the moisture content of the mash product per a temperature rise greater than about 11.1 degrees C (20 degrees F) in the mash product. In further embodiments, the steam supply system provides steam that produces a 1% increase in the moisture content of the mash product per a temperature rise of about 16.7 degrees C (30 degrees F) in the mash product.

In other embodiments of the present invention, a different steam supply system having a configuration other than what is illustrated can be employed, such those employed in conventional mash pelletizing systems, to provide steam to the first steam supply conduit 14 and the second steam supply conduit 34.

The water supply conduit 16 extends from a water supply system 34, shown with greater detail in FIG. 2. The water supply system 34 includes a water supply and various valves gauges and other components. In other embodiments, a different water supply system having a configuration other than what is illustrated can be employed, such as those employed in conventional mash pelletizing systems, to provide water to the water supply conduit 16.

In FIG. 3, the mash conditioning system 10 is shown with greater detail in the region surrounding the injector housing 12. The injector housing 12 comprises a steam inlet port 36 and a steam outlet port 38. The first steam supply conduit 14 is attached to the injector housing 12 so as to be in fluid communication with the steam inlet port 36. A steam flow control valve 39 is mounted along the first steam supply conduit 14 at a location upstream from the steam inlet port 36. The steam flow control valve 39 regulates the amount of steam delivered by the first steam supply conduit 14 into the injector housing 12. The water delivery conduit 16 extends from the water system 34, into the injector housing 12, and terminates at a water outlet port 40 located within the injector housing. A thermometer or temperature sensor 41 is mounted along the water delivery conduit 16 upstream from the injector housing 12. A water delivery nozzle 42 is connected to the water outlet port 40. Preferably, the nozzle 42 delivers a spray of water droplets as opposed to a continuous stream of water so that the water can be more readily mixed with the steam. To prevent heat loss, insulation 43 covers the portions of the injector housing 12, first steam supply conduit 14, and water supply conduit 16.

A segment 44 of the water delivery conduit 16 is coiled around a segment 46 of the first steam delivery conduit 14. The segment 44 of the water delivery conduit 16 can be made of copper tubing, which has the advantage of having a relatively high thermal conductivity as compared to many pipe materials. In this manner, the water delivery conduit 16 is in thermal communication with the first steam delivery conduit 14 such that water within the water delivery conduit is heated by steam within the first steam delivery conduit. In other embodiments, other methods of heating the water within the water delivery conduit can be employed, such as by electric resistive coils or burners located adjacent the water delivery conduit.

Still referring to FIG. 3, the injector housing 12 defines a steam flow path 48 that runs from the steam inlet port 36 to the steam outlet port 38. Preferably, the nozzle 42 is located within the steam flow path 48 so that water exiting the nozzle is more efficiently mixed with the steam. The nozzle 42 is oriented to deliver water toward the steam outlet port 38 along the same direction as the steam flow path 48. Also shown is a steam-water mixing chamber 45. The mixing chamber 45 is located along the steam flow path 48 and downstream from the nozzle 42. The nozzle 42 introduces fine droplets of water into the mixing chamber 45, which are mixed with and/or carried away by the steam that enters the steam inlet port 36. In this manner, a mixture or combination of steam and heated water enters the conditioner vessel 18.

The injector housing 12 can be made from a modified pipe tee having three openings surrounded by flanges bolted to the first steam supply conduit 14 and the conditioner vessel 18. The steam inlet port 36 is at a ninety-degree angle from the steam outlet port 38. As such, the steam flow path 48 curves toward the steam outlet port 38. The water supply conduit 16 enters the injector housing 12 at another opening 47 in the tee that is directly opposite the steam outlet port 38. The opening 47 is covered by a nozzle adapter 49 that is bolted to a flange adjacent the opening 47. The bolted flange joints allow the nozzle adapter 49 and the injector housing 12 to be easily disconnected from other parts of the mash conditioning system 10 to allow for replacement or maintenance of the injector housing or nozzle 42. It will be appreciated that the injector housing 12 may be connected by means other than bolted flange joints to allow for maintenance and replacement, such as but not limited to screw joints.

In other embodiments the injector housing can be made from a modified elbow instead of a modified pipe tee, where the two openings of the elbow function as a steam inlet port and a steam outlet port. A water supply conduit can enter through the wall of the elbow.

In some embodiments, steam within the first steam delivery conduit 14 is at a pressure of about 172 kPa (25 psi). When the pressurized steam enters the injector housing 12 at the steam inlet port 36, which is at or near ambient air pressure, the steam expands and accelerates to a high velocity along the steam flow path 48. As a result, the water exiting the nozzle 42 is carried along the steam flow path 48 at a high velocity. The fast moving water or steam-water mixture can erode components in its path. Therefore, to minimize erosion of the injector housing 12, the nozzle 42 is preferably set to deliver water at a spray angle 50 defining a nominal spray area 52 that does not intersect with an interior wall 56 of the injector housing 12. In the illustrated embodiment, the spray angle can be about 15 degrees. It will be appreciated that, depending on the position of the nozzle relative to other components, the spray angle can be from 0 degrees to about 90 degrees.

Referring again to FIG. 3, the conditioner vessel has a conditioner inlet port 51 which is attached to the injector housing 12 so as to be in fluid communication with the steam outlet port 38 of the injector housing 12. A conditioner inlet pipe 53 extends vertically from the conditioner vessel 18 to join the conditioner inlet port 51 and steam outlet port 38 together. The spray area 52 defined by the spray angle 50 of the nozzle 42 does not intersect the joints, likelihood of leaks are minimized. In the illustrated embodiment, the distance from the nozzle 42 is preferably 15.3 cm (6 inches). In other embodiments, the distance can be from 0 cm to 30.5 cm (12 inches).

With continued reference to FIG. 3, a rotatable shaft 54 is located within the conditioner vessel 18. A paddle, blade, or pick 57 is attached to the rotatable, shaft 54 for moving the mash product 59 axially along the length of the vessel 18. Although only one pick 57 is illustrated, there can be a helical array of picks 57 attached to the shaft 54 to facilitate efficient conditioning of the mash product. The pick 57 also moves the mash product 59 within the conditioner vessel 18 in a selected rotational direction 58 within the conditioner vessel 18. In FIG. 3, the rotational direction is clockwise. With a clockwise rotational direction, the conditioner inlet port 51 and, thus, the injector housing 12 are preferably located to the right of the rotatable shaft 54, as is illustrated. This configuration allows for delivery of steam from the injector housing 12 into the conditioner vessel 18 in a direction that is tangent to or goes along the rotational direction 58 in which the mash product is moved within the conditioner vessel. This tangential configuration has the advantage of keeping the nozzle 42 and interior of the injector housing 12 free of mash product, which might otherwise be pushed into the injector housing if the conditioner inlet port 51 and the injector housing 12 were located to the left of the rotatable shaft 54 in FIG. 3.

The nozzle 42 is at an offset position from the rotatable shaft 54 within the conditioner vessel 18. The offset position allows the spray area 52 defined by the spray angle 50 of the nozzle 42 to keep clear of the rotatable shaft 54 and other associated components. In this way, erosion caused by the fast moving steam-water mixture on the shaft and other components is minimized. Preferably, the nozzle 42 is radially located midway between the shell or perimeter wall 60 of the conditioner vessel 18 and the rotatable shaft 54.

A method of conditioning mash product in accordance with an embodiment of the present invention will now be described. Grains are ground into particles to produce mash having a temperature within a first temperature range, which can be from about 32.2 degrees C (90 degrees F) to about 37.8 degrees C (100 degrees F). The mash can also have a moisture content within a first moisture content range, which can be from about 12% to about 13-1/2%. The unconditioned mash is then brought to an optimal temperature and moisture content that results in pellets produced from the mash having a desired durability and other characteristics. The optimal temperature and moisture content can also prevent pelleting machinery from "skidding," "choking," or otherwise becoming inoperative.

The unconditioned mash can be brought to an optimal temperature that is within a second temperature range that is different than the first temperature range. The second temperature range can partially overlap or be entirely greater than the first temperature range. The second temperature range can be from about 90.6 degrees C (195 degrees F) to about 96.1 degrees C (205 degrees F).

The unconditioned mash can be brought to an optimal moisture content that is within a second moisture content range that is different than the first moisture content range. The second moisture content range can partially overlap or be entirely greater than the first moisture content range. The second moisture content range can be from about 17% to about 17-1/2%.

Steam can be introduced to the unconditioned mash to bring the mash to the optimal temperature and optimal moisture content. The steam can have a steam quality of greater than 80% so as to minimize erosion of machinery. The steam can be introduced by first placing the unconditioned mash into an inlet end of an elongate conditioner vessel and delivering the steam to a steam manifold at an inlet end of the vessel. The steam can be used to provide all or a majority of the moisture necessary to achieve the optimal moisture content.

In addition to the steam, the unconditioned mash can be brought to the optimal temperature and optimal moisture content by introducing a mixture of water and additional steam to the mash. The additional steam can have a steam quality of greater than 80%. The steam-water mixture can be introduced at an axial distance from the inlet end of the elongate conditioner vessel, such as a third of the way along the vessel, or two-thirds of the way along the vessel. The steam-water mixture can be used to provide about 1% or less of the moisture necessary to achieve the optimal moisture content.

The steam-water mixture can be used when weather or atmospheric conditions cause a drop or rise in temperature or moisture in the mash or when the steam delivered to the steam manifold is unable, by itself, to bring the mash to the optimal temperature and optimal moisture content. The steam-water mixture can be adjusted to provide more or less moisture to bring the mash to the optimal moisture content. The steam-water mixture can be adjusted to provide more or less heat to bring the mash to the optimal temperature.

The water and additional steam can be mixed in an injector housing connected to the conditioner vessel. A steam supply line can deliver the additional steam to the injector housing and a water spray nozzle can introduce water droplets into the additional steam. Prior to mixing the additional steam and the water, the water can be preheated outside of the injector housing. Using preheated water has been found to avoid negative effects associated with using cold or unheated water, such as a diminished ability to remove moisture from pellets that are formed using the mash. The water can be preheated to a temperature of about 37.8 degrees C (100 degrees F). Preheating can be performed by running the water through tubing coiled around or traced along the steam supply line.

The steam-water mixture can be introduced at a location along the conditioner vessel such that its nominal spray area intersects only the mash inside the conditioner vessel. The steam-water mixture can be introduced at a location along the conditioner vessel such that its nominal spray area avoids intersecting with mechanical components so as to minimize erosion of the mechanical components.

FIG. 4 shows a portion of another mash conditioning system 70 having elements labeled with reference numerals corresponding to similarly functioning elements of the mash conditioning system 10 of FIGS. 1-3. A difference between the system 70 of FIG. 4 and system 10 of FIGS. 1-3 is that the system 70 includes a temperature regulating valve 72 attached to the water supply conduit 16. The regulating valve 72 allows the amount of water flowing through the coiled segment 44 of the water supply conduit 16 to be adjusted, which regulates the temperature of the water reaching the nozzle 42. Another difference is that entry positions of the first steam supply conduit 14 and the water supply conduit 16 into the pipe tee are alternated.

In FIG. 4, the steam flow path 48 is substantially straight within the injector housing 12 and the water supply conduit 16 enters the injector housing 12 at a ninety-degree angle to the steam flow path. The water supply conduit 16 includes an elbow fitting 74 upstream of the nozzle 42, which allows the nozzle 42 to be oriented in a manner that directs water in a direction toward the conditioner vessel 18 and along the direction of steam flow.

FIG. 5 shows a portion of yet another mash conditioning system 80 having elements labeled with reference numerals corresponding to similarly functioning elements of the mash conditioning system 70 of FIG. 4. A difference between the system 80 of FIG. 5 and system 70 of FIG. 4 is that the system 80 includes a nozzle 82 that is oriented in a manner that directs water in a direction away from the conditioner vessel 18 and opposite the direction of steam flow, which is believed to allow for improved mixing of the steam and water prior to entering the conditioner vessel 18 as compared to directing water toward the conditioner vessel 18.

FIG. 6 shows a further embodiment of the present invention. A portion of a mash conditioning system 90 is shown having elements labeled with reference numerals corresponding to similarly functioning elements of the mash conditioning system 80 of FIG. 5. In FIG. 6, an injector housing 12 has interior walls 92 that flare outward from the steam inlet port 36 to form an enlarged mixing chamber 45 at the center of the injector housing 12. A nozzle 94 is located within the enlarged mixing chamber 45. Downstream from the nozzle 94, the interior walls 92 taper inward toward the steam outlet port 38. The enlarged mixing chamber 45 is believed to allow for improved mixing of the steam and water prior to entering the conditioner vessel 18 as compared to a narrower mixing chamber. With the enlarged mixing chamber 45, the interior walls 92 are further away from the nozzle 94, which reduces erosion of the walls 92 caused by the fast moving water and steam-water mixture. The nozzle adapter 49 can be attached to the injector housing 12 such that the nozzle 42 points toward the steam inlet port 36.

In FIG. 7, the nozzle adapter 49 is optionally oriented within the enlarged mixing chamber 45 such that the nozzle 94 points toward the steam outlet port 38 at the bottom of the injector housing 12.

While several particular forms of the invention have been illustrated and described, it will also be apparent that various modifications can be made without departing from the scope of the invention. It is also contemplated that various combinations or subcombinations of the specific features and aspects of the disclosed embodiments can be combined with or substituted for one another in order to form varying modes of the invention. Accordingly, it is not intended that the invention be limited, except as by the appended claims.

## Claims

1. A mash conditioning apparatus comprising:
an injector housing comprising a steam inlet port and steam outlet port, the injector housing defining a steam flow path between the steam inlet port and the steam outlet port; and
a water delivery conduit terminating in a water delivery nozzle oriented to introduce water into the steam flow path.

2. The apparatus of claim 1, further comprising a steam delivery conduit in fluid communication with the steam inlet port of the injector housing.

3. The apparatus of claim 2, wherein a segment of the water delivery conduit is any one of (a) coiled around a segment of the steam delivery conduit, and (b) in thermal communication with a segment of the steam delivery conduit such that water within the water delivery conduit can be heated by steam within the steam delivery conduit.

4. The apparatus of claim 1, wherein the nozzle is disposed within the steam flow path.

5. The apparatus of claim 1, wherein the nozzle is oriented to deliver water toward the steam outlet port.

6. The apparatus of claim 1, further comprising a conditioner vessel for holding mash product, the vessel comprising a conditioner inlet port in fluid communication with the steam outlet port of the injector housing.

7. The apparatus of claim 6, further comprising a rotatable shaft disposed within the conditioner vessel and a pick attached to the rotatable shaft for moving the mash product within the conditioner vessel in a selected rotational direction within the conditioner vessel.

8. The apparatus of claim 7, wherein conditioner inlet port is located on the conditioner vessel to allow delivery of steam from the injector housing into the conditioner vessel in a direction along the selected rotational direction in which the mash is moved within the conditioner vessel.

9. The apparatus of claim 7, wherein the nozzle delivers water at a spray angle defining a nominal spray area that does not intersect with any one of (a) the rotatable shaft within the conditioner vessel, (b) a wall of the injector housing, and (c) a wall of the conditioner inlet port.

10. The apparatus of claim 6, further comprising a steam supply system in fluid communication with the conditioner vessel, the steam supply system being capable of providing steam that produces a 1% increase in the moisture content of the mash product per a temperature rise greater than about 11.1 degrees C (20 degrees F) in the mash product.

11. The apparatus of claim 1, further comprising a steam supply system in fluid communication with the steam inlet port of the injector housing, the steam supply system being capable of providing steam to the injector housing having a steam quality greater than about 80%.

12. A mash conditioning apparatus comprising:
an injector housing comprising an outlet port and a steam-water mixing chamber adjacent the outlet port;
a steam supply conduit connected to the injector housing;
a water supply conduit connected to the injector housing, the water supply conduit comprising a segment disposed adjacent the steam supply conduit to allow water within the water supply conduit to be heated by steam within the steam supply conduit; and
a water delivery nozzle in fluid communication with the water supply conduit, the water delivery nozzle oriented to deliver the water heated by the steam into the steam-water mixing chamber.

13. A method of conditioning mash product, the method comprising:
mixing heated water and steam to produce a water-steam mixture;
adding the water-steam mixture to a mash having a starting temperature and a starting moisture content; and
bringing the mash to an optimal temperature and an optimal moisture content.

14. The method of claim 13, wherein any one of (a) the starting temperature is within a range from about 32.2 degrees C (90 degrees F) to about 37.8 degrees C (100 degrees F), and (b) the optimal temperature is within a range from about 90.6 degrees C (195 degrees F) to about 96.1 degrees C (205 degrees F).

15. The method of claim 13, wherein any one of (a) the starting moisture content is within a range from about 12% to about 13-1/2%, and (b) the optimal moisture content is within a range from about 17% to about 17-1/2%.

16. The method of claim 13, further comprising adding steam to the mash in addition to the water-steam mixture.

17. The method of claim 13, wherein the heated water is heated with the steam prior to mixing it with the steam.

18. The method of claim 13, further comprising regulating any one of (a) the amount of steam in the water-steam mixture as a function of the starting temperature or the starting moisture content of the mash, and (b) the amount of water in the water-steam mixture as a function of the starting temperature or the starting moisture content of the mash.

## Patentansprüche

1. Breikonditionierer, aufweisend:
ein Einspritzgehäuse, aufweisend eine Dampfeinlassöffnung und Dampfauslassöffnung, wobei das Einspritzgehäuse einen Dampfstromweg zwischen der Dampfeinlassöffnung und der Dampfauslassöffnung definiert; und
eine Wasserzufuhrleitung, die in einer Wasserzufuhrdüse endet, welche zum Einleiten von Wasser in den Dampfstromweg ausgerichtet ist.

2. Konditionierer nach Anspruch 1, ferner aufweisend eine Dampfzufuhrleitung in Fluidverbindung mit der Dampfeinlassöffnung des Einspritzgehäuses.

3. Konditionierer nach Anspruch 2, wobei ein Segment der Wasserzufuhrleitung ein beliebiges von (a) um ein Segment der Dampfzufuhrleitung gewickelt und (b) in Wärmeverbindung mit einem Segment der Dampfzufuhrleitung ist, sodass Wasser innerhalb der Wasserzufuhrleitung durch Dampf innerhalb der Dampfzufuhrleitung erhitzt werden kann.

4. Konditionierer nach Anspruch 1, wobei die Düse innerhalb des Dampfstromwegs angeordnet ist.

5. Konditionierer nach Anspruch 1, wobei die Düse zum Zuführen von Wasser zur Dampfauslassöffnung hin ausgerichtet ist.

6. Konditionierer nach Anspruch 1, ferner aufweisend ein Konditionierungsgefäß zum Halten eines Breiprodukts, das Gefäß aufweisend eine Konditionierereinlassöffnung in Fluidverbindung mit der Dampfauslassöffnung des Einspritzgehäuses.

7. Konditionierer nach Anspruch 6, ferner aufweisend eine Drehwelle, die innerhalb des Konditionierergefäßes angeordnet ist, und eine Hacke, die zum Bewegen des Breiprodukts innerhalb des Konditionierergefäßes in einer ausgewählten Drehrichtung innerhalb des Konditionierergefäßes an der Drehwelle angebracht ist.

8. Konditionierer nach Anspruch 7, wobei sich die Konditionierereinlassöffnung zum Ermöglichen der Zufuhr von Dampf aus dem Einspritzgehäuse in das Konditionierergefäß in einer Richtung entlang der ausgewählten Drehrichtung, in der der Brei innerhalb des Konditionierergefäßes bewegt wird, am Konditionierergefäß befindet.

9. Konditionierer nach Anspruch 7, wobei die Düse Wasser in einem Sprühwinkel zuführt, der einen Nennsprühbereich definiert, der sich nicht mit einem beliebigen von (a) der Drehwelle innerhalb des Konditionierergefäßes, (b) einer Wand des Einspritzgehäuses und (c) einer Wand der Konditionierereinlassöffnung schneidet.

10. Konditionierer nach Anspruch 6, ferner aufweisend ein Dampfzufuhrsystem in Fluidverbindung mit dem Konditionierergefäß, wobei das Dampfzufuhrsystem dazu imstande ist, Dampf vorzusehen, der einen Anstieg des Feuchtigkeitsgehalts des Breiprodukts von 1% pro Temperaturanstieg über ungefähr 11,1 °C (20 °F) im Breiprodukt erzeugt.

11. Konditionierer nach Anspruch 1, ferner aufweisend ein Dampfzufuhrsystem in Fluidverbindung mit der Dampfeinlassöffnung des Einspritzgehäuses, wobei das Dampfzufuhrsystem dazu imstande ist, dem Einspritzgehäuse Dampf mit einer Dampfqualität von über ungefähr 80% zuzuführen.

12. Breikonditionierer, aufweisend:
ein Einspritzgehäuse, aufweisend eine Auslassöffnung und eine Dampf/Wasser-Mischkammer, die der Auslassöffnung benachbart ist;
eine Dampfzufuhrleitung, die mit dem Einspritzgehäuse verbunden ist;
eine Wasserzufuhrleitung, die mit dem Einspritzgehäuse verbunden ist, wobei die Wasserzufuhrleitung ein Segment aufweist, das der Dampfzufuhrleitung benachbart angeordnet ist, um zu ermöglichen, dass Wasser innerhalb der Wasserzufuhrleitung durch Dampf innerhalb der Dampfzufuhrleitung erhitzt wird; und
eine Wasserzufuhrdüse in Fluidverbindung mit der Wasserzufuhrleitung, wobei die Wasserzufuhrleitung zum Zuführen des Wassers, das durch den Dampf erhitzt ist, in die Dampf/Wasser-Mischkammer ausgerichtet ist.

13. Verfahren zum Konditionieren eines Breiprodukts, das Verfahren aufweisend:
Mischen von erhitztem Wasser und Dampf zum Erzeugen einer Wasser/Dampf-Mischung;
Zusetzen der Wasser/Dampf-Mischung zu einem Brei mit einer Anfangstemperatur und einem Anfangsfeuchtigkeitsgehalt; und
Bringen des Breis auf eine optimale Temperatur und einen optimalen Feuchtigkeitsgehalt.

14. Verfahren nach Anspruch 13, wobei ein beliebiges von (a) der Anfangstemperatur sich in einem Bereich von ungefähr 32,2 °C (90 °F) bis ungefähr 37,8 °C (100 °F) befindet und (b) die optimale Temperatur sich in einem Bereich von ungefähr 90,6 °C (195 °F) bis ungefähr 96,1 °C (205 °F) befindet.

15. Verfahren nach Anspruch 13, wobei ein beliebiges von (a) des Anfangsfeuchtigkeitsgehalts sich in einem Bereich von ungefähr 12% bis ungefähr 13,5% befindet und (b) der optimale Feuchtigkeitsgehalt sich in einem Bereich von ungefähr 17% bis ungefähr 17,5% befindet.

16. Verfahren nach Anspruch 13, ferner aufweisend, das Zusetzen von Dampf zum Brei zusätzlich zur Wasser/Dampf-Mischung.

17. Verfahren nach Anspruch 13, wobei das erhitzte Wasser vor dem Mischen desselben mit dem Dampf mit dem Dampf erhitzt wird.

18. Verfahren nach Anspruch 13, ferner aufweisend das Regulieren eines beliebigen von (a) der Menge an Dampf in der Wasser/Dampf-Mischung in Abhängigkeit von der Anfangstemperatur oder des Anfangsfeuchtigkeitsgehalts des Breis und (b) der Menge an Wasser in der Wasser/Dampf-Mischung in Abhängigkeit von der Anfangstemperatur oder des Anfangsfeuchtigkeitsgehalts des Breis.

## Revendications

1. Appareil de conditionnement de bouillie, comprenant:
un boîtier d'injecteur comportant un port d'entrée de vapeur et un port de sortie de vapeur, le boîtier d'injecteur définissant un chemin d'écoulement de vapeur entre le port d'entrée de vapeur et le port de sortie de vapeur; et
un conduit de distribution d'eau qui se termine en une buse de distribution d'eau orientée de manière à introduire de l'eau dans le chemin d'écoulement de vapeur.

2. Appareil selon la revendication 1, comprenant en outre un conduit de distribution de vapeur qui est en communication fluidique avec le port d'entrée de vapeur du boîtier d'injecteur.

3. Appareil selon la revendication 2, dans lequel un segment du conduit de distribution d'eau est soit (a) enroulé autour d'un segment du conduit de distribution de vapeur, soit (b) en communication thermique avec un segment du conduit de distribution de vapeur, de telle sorte que l'eau à l'intérieur du conduit de distribution d'eau puisse être chauffée par la vapeur à l'intérieur du conduit de distribution de vapeur.

4. Appareil selon la revendication 1, dans lequel la buse est disposée à l'intérieur du chemin d'écoulement de vapeur.

5. Appareil selon la revendication 1, dans lequel la buse est orientée de manière à distribuer l'eau en direction du port de sortie de vapeur.

6. Appareil selon la revendication 1, comprenant en outre une cuve de conditionneur pour contenir le produit de bouillie, la cuve comportant un port d'entrée de conditionneur qui est en communication fluidique avec le port de sortie de vapeur du boîtier d'injecteur.

7. Appareil selon la revendication 6, comprenant en outre un arbre rotatif qui est disposé à l'intérieur de la cuve de conditionneur et un bras qui est attaché à l'arbre rotatif pour remuer le produit de bouillie à l'intérieur de la cuve de conditionneur dans un sens de rotation sélectionné à l'intérieur de la cuve de conditionneur.

8. Appareil selon la revendication 7, dans lequel le port d'entrée de conditionneur est situé sur la cuve de conditionneur de manière à permettre une distribution de vapeur à partir du boîtier d'injecteur dans la cuve de conditionneur dans une direction le long du sens de rotation sélectionné dans lequel la bouillie est remuée à l'intérieur de la cuve de conditionneur.

9. Appareil selon la revendication 7, dans lequel la buse distribue de l'eau avec un angle de pulvérisation qui définit une surface de pulvérisation nominale qui ne coupe ni (a) l'arbre rotatif à l'intérieur de la cuve de conditionneur, ni (b) une paroi du boîtier d'injecteur, ni (c) une paroi du port d'entrée de conditionneur.

10. Appareil selon la revendication 6, comprenant en outre un système de fourniture de vapeur qui est en communication fluidique avec la cuve de conditionneur, le système de fourniture de vapeur étant capable de fournir une vapeur qui produit une augmentation de 1 % de la teneur en humidité du produit de bouillie pour une augmentation de température supérieure à environ 11,1 degrés Celsius (20 degrés Fahrenheit) dans le produit de bouillie.

11. Appareil selon la revendication 1, comprenant en outre un système de fourniture de vapeur qui est en communication fluidique avec le port d'entrée de vapeur du boîtier d'injecteur, le système de fourniture de vapeur étant capable de fournir de la vapeur au boîtier d'injecteur avec une qualité de vapeur supérieure à environ 80 %.

12. Appareil de conditionnement de bouillie, comprenant:
un boîtier d'injecteur comportant un port de sortie et une chambre de mélange vapeur - eau adjacente au port de sortie;
un conduit de fourniture de vapeur qui est connecté au boîtier d'injecteur;
un conduit de fourniture d'eau qui est connecté au boîtier d'injecteur, le conduit de fourniture d'eau comprenant un segment qui est disposé à proximité du conduit de fourniture de vapeur de manière à permettre à l'eau à l'intérieur du conduit de fourniture d'eau d'être chauffée par la vapeur à l'intérieur du conduit de fourniture de vapeur; et
une buse de distribution d'eau qui est en communication fluidique avec le conduit de fourniture d'eau, la buse de distribution d'eau étant orientée de manière à distribuer l'eau chauffée par la vapeur dans la chambre de mélange vapeur - eau.

13. Procédé de conditionnement d'un produit de bouillie, comprenant les étapes suivantes:
mélanger de la vapeur et de l'eau chauffée afin de produire un mélange eau - vapeur;
ajouter le mélange eau - vapeur à une bouillie présentant une température de départ et une teneur en humidité de départ; et
amener la bouillie à une température optimale et à une teneur en humidité optimale.

14. Procédé selon la revendication 13, dans lequel soit (a) la température de départ est comprise à l'intérieur d'une gamme d'environ 32,2 degrés Celsius (90 degrés Fahrenheit) à environ 37,8 degrés Celsius (100 degrés Fahrenheit), soit (b) la température optimale est comprise à l'intérieur d'une gamme d'environ 90,6 degrés Celsius (195 degrés Fahrenheit) à environ 96,1 degrés Celsius (205 degrés Fahrenheit).

15. Procédé selon la revendication 13, dans lequel soit (a) la teneur en humidité de départ est comprise à l'intérieur d'une gamme d'environ 12 % à environ 13,5 %, soit (b) la teneur en humidité optimale est comprise à l'intérieur d'une gamme d'environ 17 % à environ 17,5 %.

16. Procédé selon la revendication 13, comprenant en outre l'ajout de vapeur à la bouillie en plus du mélange eau - vapeur.

17. Procédé selon la revendication 13, dans lequel l'eau chauffée est chauffée avec la vapeur avant d'être mélangée avec la vapeur.

18. Procédé selon la revendication 13, comprenant en outre la régulation soit (a) de la quantité de vapeur dans le mélange eau - vapeur en fonction de la température de départ ou de la teneur en humidité de départ de la bouillie, soit (b) de la quantité d'eau dans le mélange eau - vapeur en fonction de la température de départ ou de la teneur en humidité de départ de la bouillie.
